# FASCICULE DE BREVET EUROPEEN

(11) **EP 0 931 406 B1**
(45) Date de publication et mention de la délivrance du brevet: **06.06.2001**
(21) Numéro de dépôt: 97919103.8
(22) Date de dépôt: 16.09.1997
(51) Int. Cl.: H04L 29/06

(54) **PROCEDE POUR LA TRANSMISSION SYNCHRONE DE DONNEES NUMERIQUES, NOTAMMENT AU MOYEN D'UN PROCESSEUR DE COMMUNICATION ASYNCHRONE**
VERFAHREN ZUR SYNCHRONEN DATENÜBERTRAGUNG, INSBESONDERE DURCH EINEN ASYNCHRONEN KOMMUNIKATIONSPROZESSOR
METHOD FOR SYNCHRONOUS TRANSMISSION OF DIGITAL DATA, IN PARTICULAR USING AN ASYNCHRONOUS COMMUNICATION PROCESSOR

(30) Priorité: 20.09.1996 FR 9611685
(43) Date de publication de la demande: 28.07.1999
(73) Titulaire: AATR Informatique S.A., 13330 Pelissanne (FR)
(72) Inventeur: CASTELLANE, Olivier, F-13330 Pelissanne (FR)
(74) Mandataire: Ballot, Paul Denis Jacques
(86) Numéro de dépôt international: FR9701628
(87) Numéro de publication internationale: WO9812853

(56) Documents cités:
- WO-A-91/07786
- DE-A- 4 128 193
- US-A- 4 579 407
- US-A- 5 054 020

## Description

La présente invention concerne la transmission de données numériques entre des systèmes informatiques, et plus particulièrement un procédé pour la transmission synchrone de données numériques.

A l'heure actuelle, la plupart des équipements informatiques comme les micro-ordinateurs sont pourvus de moyens de communication asynchrone leur permettant de communiquer avec des équipements périphériques, par exemple un autre ordinateur, une imprimante, un modem, une souris, un écran d'affichage, etc. Ces moyens de communication asynchrone prennent la forme d'une carte à circuit imprimé qui est généralement fournie d'origine dans les équipements informatiques sinon disponible dans le commerce pour un coût raisonnable.

L'élément essentiel d'une telle carte à circuit imprimé est un processeur de communication asynchrone dont le fonctionnement est standardisé pour chaque catégorie d'équipement informatique. Par exemple, le fonctionnement d'un processeur de communication asynchrone d'un micro-ordinateur PC, dénommé "UART" ("Universal Asynchronous Receiver Transmitter", soit Emetteur Récepteur Asynchrone Universel), se décompose en quatre fonctions (réglage du protocole, envoi de caractères, réception de caractères, contrôle de l'état de la ligne et du modem) accessibles de l'Unité centrale UC du micro-ordinateur.

Malgré leur coût réduit, les processeurs de communication asynchrone ne sont toutefois pas prévus pour gérer une communication de type synchrone, permettant par exemple d'accéder au réseau téléphonique numérique à commutation de paquets (connu, en France, sous le nom de TRANSPAC).

De façon générale, les communications synchrones se distinguent en effet des communications asynchrones par l'existence d'un signal d'horloge commun aux équipements connectés et offrant une grande sécurité dans le transfert des données. Ainsi, alors qu'une liaison asynchrone ne permet de transférer que des mots d'une longueur maximale de 8 bits, une liaison synchrone permet de transmettre des trames de données d'une longueur pouvant atteindre plusieurs milliers de bits et comportant divers champs de contrôle du flux de données, comme des champs d'ouverture et de fermeture de trame, des champs de vérification et de signature des données, etc.

Ainsi, dans l'état de la technique, pour établir une communication synchrone entre deux équipements informatiques, on doit faire appel à des moyens de communication spécifiques, commercialisés sous la forme de cartes à circuit imprimé comprenant un processeur de communication mixte synchrone/asynchrone. De telles cartes à processeur de communication mixte présentent toutefois l'inconvénient d'être, en raison de leur faible diffusion, d'un coût bien supérieur à celui des cartes de communication asynchrone, qui sont commercialisées à grande échelle.

On connait, d'après le document DE-A-41 28 193, un procédé pour établir une émission de type synchrone au moyen d'un processeur de communication asynchrone de type UART, dans lequel il est prévu d'émettre une série ininterrompue de bits de données par l'intermédiaire d'une sortie de contrôle DTR ainsi qu'un signal d'horloge par l'intermédiaire d'une sortie série synchrone TD, de sorte que les cycles de l'horloge coïncident avec les cycles des bits de données.

Un inconvénient d'un tel procédé est de ne proposer aucun moyen de réception de ces émissions synchrones.

Ce procédé a donc l'inconvénient de ne permettre que des communications synchrones dans un seul sens à partir d'un processeur de type UART.

La présente invention vise à pallier ces inconvénients.

Un objectif de la présente invention est d'établir une communication de type synchrone au moyen d'un processeur de type asynchrone à l'origine, le processeur devant être apte à recevoir ou à émettre une communication synchrone.

Un objectif particulier de la présente invention est de permettre un échange simultané d'émission et de réception de communications synchrones au moyen d'un tel processeur, ce qui revient à établir des communications de type "full-duplex".

Le problème de la présente est donc de synchroniser ensemble un récepteur et un émetteur de série de bits de données, le récepteur ou l'émetteur étant originellement un processeur de type asynchrone.

Enfin, un objectif de la présente invention est d'obtenir une vitesse élevée de transmission des données au moyen d'un tel processeur.

Ces objectifs sont atteints grâce à un procédé pour établir sur une ligne de transmission de données numériques une communication de type synchrone au moyen d'un processeur de communication comprenant des entrées et des sorties de contrôle d'une communication, le processeur délivrant un signal d'interruption sur changement de l'état logique d'au moins une entrée de contrôle, procédé comprenant les étapes consistant à connecter au moins un fil d'horloge de la ligne de transmission à une première entrée de contrôle du processeur, connecter un fil de réception de données de la ligne de transmission à une deuxième entrée de contrôle du processeur, connecter un fil d'émission de données de la ligne de transmission à une sortie de contrôle du processeur et, en synchronisation avec un signal d'interruption délivré par le processeur à chaque variation de l'état logique de la première entrée de contrôle, lire bit à bit sur la deuxième entrée de contrôle des données à recevoir ou écrire bit à bit sur la sortie de contrôle des données à émettre.

De préférence, la lecture bit à bit sur la deuxième entrée de contrôle est faite en synchronisation avec un signal d'interruption apparaissant à chaque variation, selon un premier sens de variation, de l'état logique de la première entrée de contrôle, et l'écriture bit à bit sur la sortie de contrôle est faite en synchronisation avec un signal d'interruption apparaissant à chaque variation, selon un second sens de variation inverse du premier, de l'état logique de la première entrée de contrôle.

Avantageusement, pour établir une communication de type synchrone avec contrôle du signal d'horloge au moyen d'un processeur de communication comportant une sortie série asynchrone, il est prévu les étapes consistant à connecter la sortie série du processeur à au moins un fil d'horloge de la ligne de transmission, et faire émettre par la sortie série du processeur une suite de 1 et de 0 ininterrompue.

La présente invention concerne également un système informatique équipé d'un processeur de communication comportant des entrées et des sorties de contrôle d'une communication, le processeur délivrant un signal d'interruption sur changement de l'état logique d'au moins une entrée de contrôle, le système comprenant des moyens de pilotage du processeur agencés pour, en synchronisation avec un signal d'interruption délivré par le processeur à chaque variation de l'état logique d'une première entrée de contrôle, lire bit à bit sur une deuxième entrée de contrôle du processeur des données à recevoir, ou écrire bit à bit sur une sortie de contrôle du processeur des données à émettre.

Selon un mode de réalisation, le processeur comporte une sortie série asynchrone et les moyens de pilotage du processeur sont agencés pour programmer la sortie série du processeur comme suit : huit bits de données, pas de bit de parité, un seul bit de stop, et envoyer continuellement dans un registre tampon de la sortie série du processeur un terme dont la valeur binaire est égale à 01010101.

De façon pratique, les moyens de pilotage du processeur comprennent un programme stocké dans une mémoire du système.

La présente invention concerne également un adaptateur pour connecter à une ligne de transmission de données de type synchrone un système informatique équipé d'un processeur de communication comportant des entrées et des sorties de contrôle d'une communication, adaptateur agencé pour connecter au moins un fil d'horloge de la ligne de transmission de données à une première entrée de contrôle du processeur, connecter un fil de réception de données de la ligne de transmission de données à une deuxième entrée de contrôle du processeur, connecter un fil d'émission de données de la ligne de transmission de données à une sortie de contrôle du processeur.

Selon un mode de réalisation, l'adaptateur est agencé pour connecter une sortie série du processeur à au moins un fil d'horloge de la ligne de transmission de données.

Ces caractéristiques, avantages ainsi que d'autres de la présente invention seront exposés plus en détail dans la description suivante du procédé de l'invention et de deux exemples de mise en oeuvre du procédé de l'invention dans un micro-ordinateur de type PC, faite à titre non limitatif en relation avec les figures jointes parmi lesquelles :
- la figure 1 représente très schématiquement l'architecture d'un processeur asynchrone classique disposé dans un micro-ordinateur de type PC,
- la figure 2 représente une connexion selon l'invention du processeur de la figure 1 à une ligne de transmission de données de type synchrone, pour la gestion d'une communication synchrone sans contrôle du signal d'horloge,
- la figure 3 est un organigramme représentant les étapes essentielles d'un procédé de pilotage selon l'invention d'un processeur asynchrone connecté selon le schéma de la figure 2,
- la figure 4 représente une connexion selon l'invention du processeur de la figure 1 à une ligne de transmission de données de type synchrone, pour la gestion d'une communication synchrone avec contrôle du signal d'horloge, et
- la figure 5 est un organigramme représentant les étapes essentielles d'un procédé de pilotage selon l'invention d'un processeur asynchrone connecté selon le schéma de la figure 4.

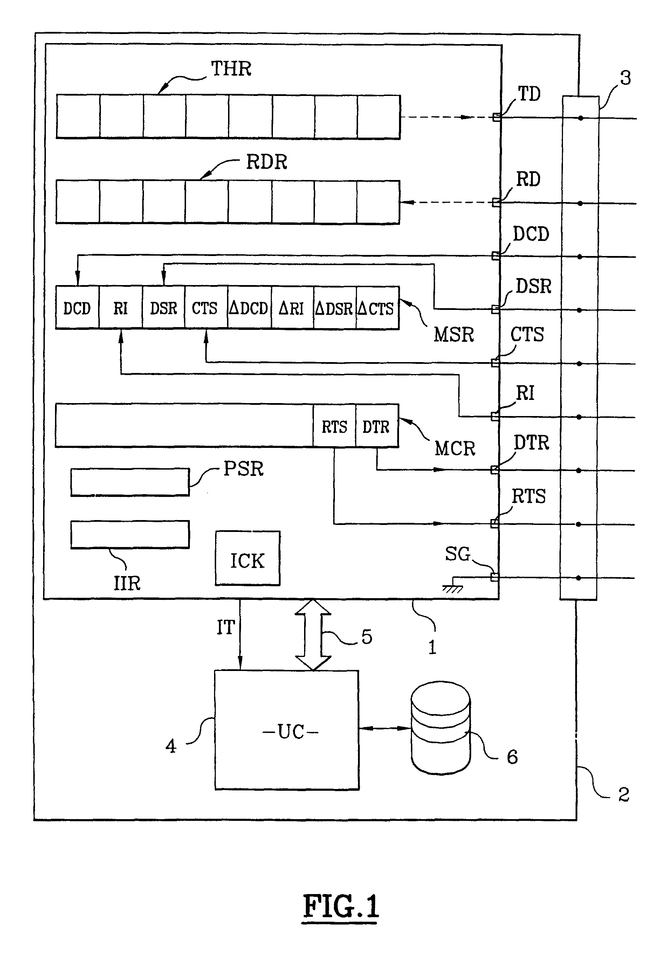

A titre de rappel, la figure 1 représente très schématiquement l'architecture d'un processeur de communication asynchrone 1 de type UART présent dans un micro-ordinateur 2 de type PC (Personal Computer, soit ordinateur personnel) à partir duquel un exemple de mise en oeuvre du procédé de l'invention sera décrit plus loin. Le processeur 1 comporte diverses entrées ou sorties TD, RD, DCD, DSR, CTS, RI, DTR, RTS, SG reliées à un connecteur 3 présent sur le panneau arrière du micro-ordinateur 2. Les diverses références TD, RD, DCD, DSR... ne sont pas choisies arbitrairement mais correspondent aux abréviations usuelles des fonctions de communication synchrone ou asynchrone prévues par la Recommandation V.24 du Comité Consultatif International Télégraphique et Téléphonique (CCITT), reproduites sur le tableau 1 ci-après annexé. Ainsi, le processeur 1 comprend une sortie série asynchrone TD, une entrée série asynchrone RD, quatre entrées de contrôle de communication DCD, DSR, CTS, RI, deux sorties de contrôle de communication DTR et RTS et une entrée/sortie SG ou plot de masse. Les données à émettre de façon asynchrone sont chargées dans un registre tampon dénommé "registre d'attente de l'émetteur" THR ("Transmission Holding Register") puis sont appliquées bit à bit par le processeur 1 sur la sortie série TD avec insertion d'un bit de démarrage ou bit de "start", d'un bit de parité (optionnel) et d'un signal de stop d'une longueur programmable de 1, 1,5 ou 2 bits. La cadence d'émission est fixée par une horloge interne programmable ICK du processeur 1. Les données asynchrones reçues sur l'entrée RD sont envoyées par le processeur 1 à la cadence de l'horloge ICK (et recalage de l'horloge ICK à chaque bit de "start" reçu) dans un registre tampon accessible en lecture dénommé "registre de données du récepteur" RDR (Receiver Data Register), avec suppression des bits de "start", de parité, et de stop. Les bits DCD, DSR, CTS, RI reçus par les entrées de contrôle de même référence sont recopiés de façon transparente par le processeur 1 dans un registre tampon accessible en lecture dénommé "registre d'état du modem" MSR (Modem Status Register"). Ce registre comprend également des bits "delta"DCD, "delta"DSR, "delta"CTS et "delta"RI, ces bits étant mis à 1 par le processeur quand une variation du bit correspondant DCD, DSR, CTS et RI est détectée. Les bits de contrôle RTS et DTR sont chargés dans un registre dénommé "registre de contrôle du modem" MCR (Modem Control Register") et sont recopiés de façon transparente par le processeur sur les sorties RTS, DTR correspondantes. Le protocole de communication asynchrone et notamment le nombre de bits de stop, l'option du bit de parité, la vitesse de transmission... peut être choisi grâce à différents registres que l'on désignera "registres de réglage du protocole" PSR (Protocol Setting Registers).

Enfin, une caractéristique essentielle du processeur 1 qui va servir de base à la présente invention est que le processeur 1 génère un signal d'interruption IT lorsque certains paramètres de communication sont modifiés ou lorsqu'une intervention sur un registre est nécessaire. En particulier, on retiendra qu'un signal d'interruption est émis par le processeur quand un bit de contrôle DCD, RI, DSR, CTS change de valeur et quand le registre d'émission THR est vide. Lorsqu'un signal d'interruption IT est émis, la cause du signal d'interruption peut être identifiée par une lecture des bits "delta" du registre MSR ou par une lecture d'un registre dénommé "registre d'identification des interruptions" IIR (Interrupt Identification Register).

Dans le micro-ordinateur 2 de type PC, l'ensemble des registres qui viennent d'être décrits sont accessibles à l'Unité Centrale 4 par l'intermédiaire d'un bus de données interne 5 et le signal d'interruption IT est reçu par l'Unité Centrale sous la forme d'une interruption matérielle conventionnelle. La gestion d'une communication asynchrone classique est assurée par l'Unité Centrale sous l'égide d'un programme de pilotage du processeur 1 enregistré dans le disque magnétique 6 du micro-ordinateur 2.

Comme on l'a indiqué au préambule, un tel processeur asynchrone 1 se trouve dans la plupart des équipements informatiques ou est disponible dans le commerce à faible coût, mais n'est pas conçu pour gérer une communication synchrone. La présente invention propose de pallier cet inconvénient afin de permettre la connexion d'un équipement informatique à une ligne de transmission de données synchrone sans nécessiter l'achat et l'installation d'un processeur de communication synchrone.

Pour atteindre cet objectif, la présente invention se base sur la constatation préalable que, dans la plupart des communications synchrones, les fonctions de contrôles DCD, DSR, CTS, RI, DTR, RTS figurant dans le tableau 1 ci-après annexé ne sont pas toutes utilisées. En effet, la gestion des paramètres de communication est généralement réalisée à partir de champs de contrôle insérés dans les trames de données transmises au cours de la communication.

Ainsi, une idée générale de la présente invention est d'utiliser certaines entrées ou sorties de contrôle du processeur asynchrone 1 qui ne sont pas nécessaires à la gestion de la communication, à d'autres fins que celles qui leurs sont normalement attribuées. Plus particulièrement, selon une première caractéristique du procédé de l'invention, on applique le signal d'horloge de la communication synchrone sur une première entrée de contrôle du processeur synchrone afin de générer un signal d'interruption synchronisé au signal d'horloge, et on utilise ce signal d'interruption pour synchroniser l'émission ou la réception de données. Par ailleurs, comme les entrées ou sorties séries TD et RD du processeur 1 ne permettent pas de recevoir ou d'émettre des données synchrones, une deuxième caractéristique du procédé de l'invention est d'utiliser une deuxième entrée de contrôle du processeur pour la lecture des données synchrones et une sortie de contrôle du processeur pour l'émission des données synchrones.

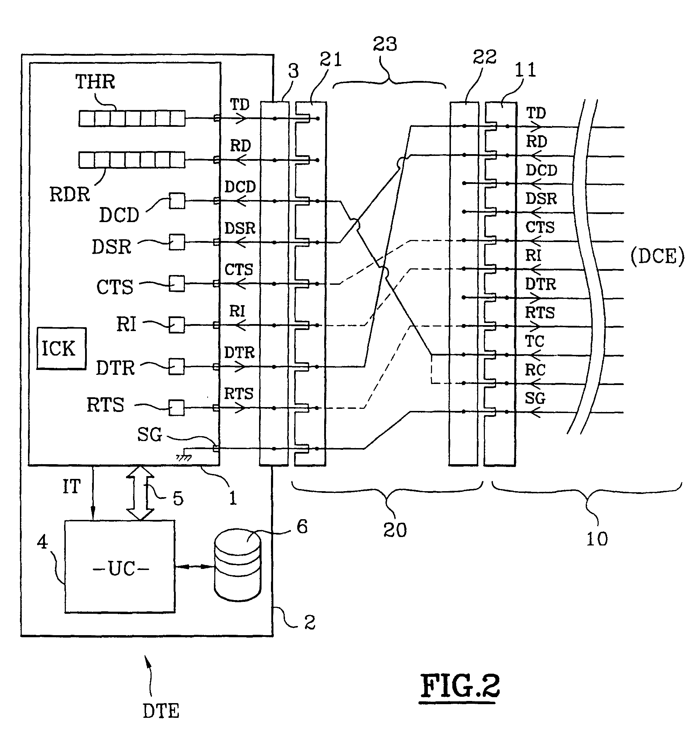

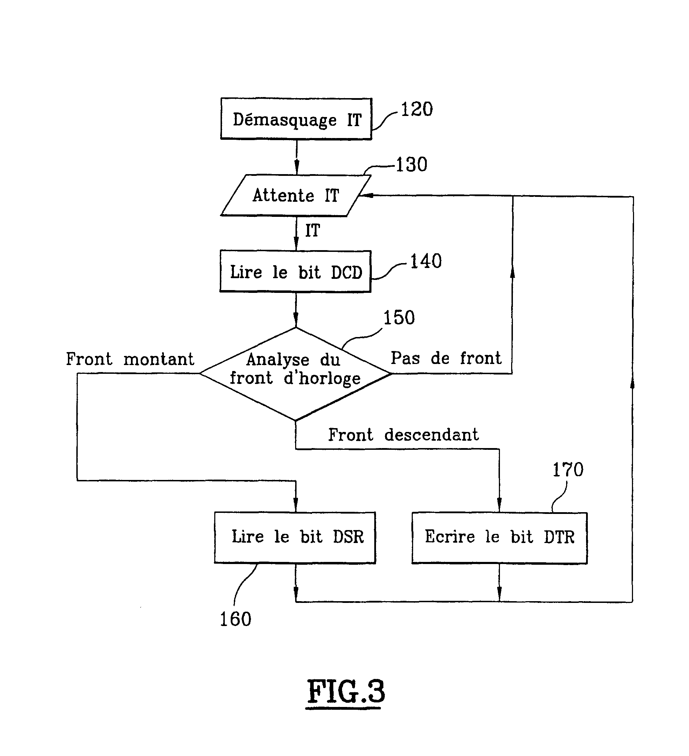

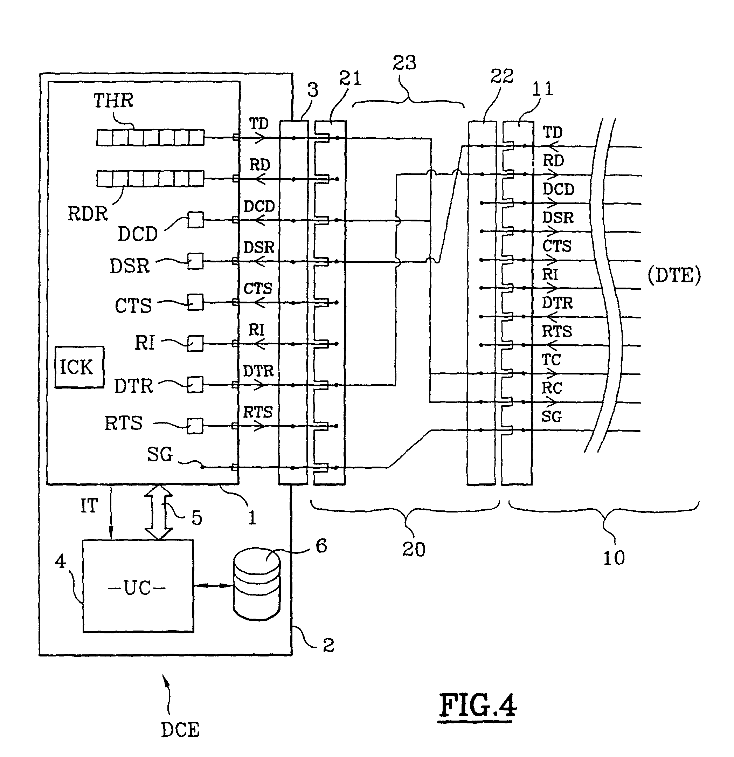

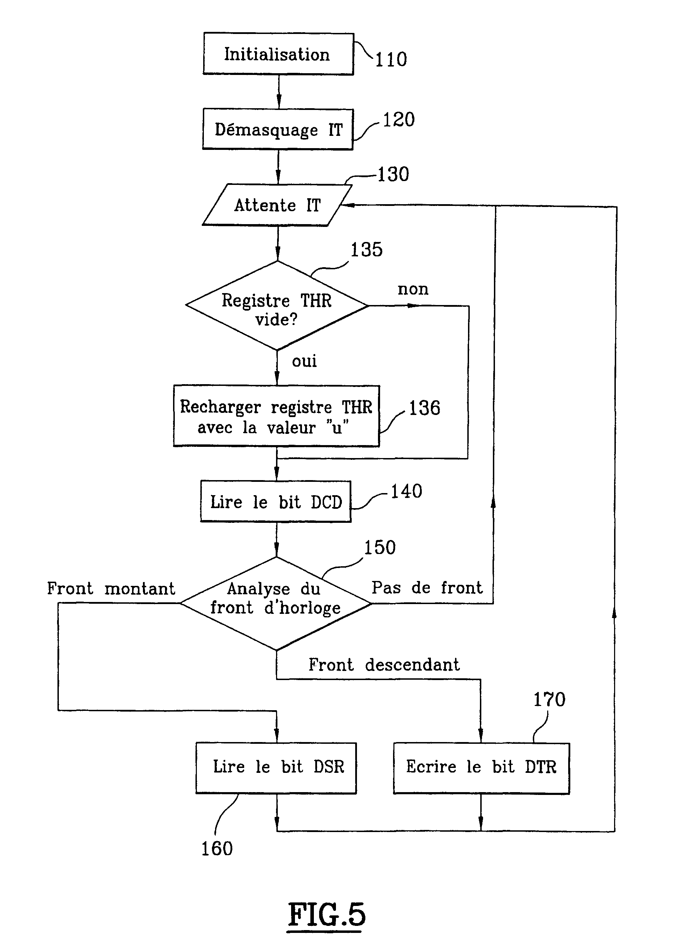

Dans ce qui suit, on va tout d'abord décrire en relation avec les figures 2 et 3 un exemple de mise en oeuvre du procédé de l'invention dans lequel le micro-ordinateur de la figure 1 est connecté à une ligne de transmission synchrone en tant qu'Equipement Terminal de Traitement de Données, ou DTE (Data Terminal Equipment) selon l'abréviation utilisée par la Recommandation V.24 du CCITT. Ce mode de fonctionnement se caractérise notamment par le fait que le micro-ordinateur n'a pas la maîtrise du signal d'horloge de la communication. On décrira ensuite en relation avec les figures 4 et 5 un exemple de réalisation de l'invention dans lequel le micro-ordinateur de la figure 1 est connecté à une ligne de transmission synchrone en tant qu'Equipement de Terminaison du Circuit de Données, ou DCE (Data Communication Equipment) . Ce deuxième mode de fonctionnement se caractérise notamment par le fait que le micro-ordinateur est maître du signal d'horloge.

La figure 2 représente le micro-ordinateur 2 de la figure 1 connecté à une ligne 10 de communication synchrone comprenant des fils TD, RD, DCD, DSR, CTS, RI, DTR, RTS, SG communs aux lignes synchrones ou asynchrones et correspondant aux fonctions normalisées déjà décrites dans le tableau 1. La ligne 10 comprend également deux fils d'horloge désignés TC et RC, les références TC et RC étant également choisies en conformité avec la norme V.24 du CCITT comme indiqué dans le tableau 2 ci-après annexé. Ici, le micro-ordinateur 2 est connecté à la ligne 10 en tant que DTE de sorte que l'on trouve, à l'autre extrémité de la ligne 10, un équipement informatique (non représenté) fonctionnant en tant que DCE (ou Modem) et assurant l'émission sur les fils TC et RC du signal d'horloge. Dans un souci de simplification du dessin, le processeur 1 est représenté sur la figure 2 de façon partielle, seuls les registres THR et RDR, les bits DCD, DSR, CTS, RI du registre MSR et les bits DTR et RTS du registre MCR étant représentés.

Selon le procédé de l'invention :
- le signal d'horloge circulant sur le fil TC ou RC de la ligne 10 est appliqué sur une première entrée de contrôle du processeur 1, afin de générer un signal d'interruption IT synchronisé au signal d'horloge,
- les données à émettre sur le fil TD de la ligne 10 sont émises à partir d'une sortie de contrôle du processeur 1,
- les données à recevoir du fil RD de la ligne 10 sont reçues sur une deuxième entrée de contrôle du processeur 1.

Ici, le fil d'horloge TC est connecté à l'entrée de contrôle DCD, le fil RD de réception de données est connecté à l'entrée de contrôle DSR et le fil TD d'émission de données connecté à la sortie de contrôle DTR. Le fil SG peut être connecté de façon classique au plot SG du processeur, à moins que, de façon classique, la transmission des signaux ne soit faite au moyen de paires de fils symétriques.

En pratique, et comme représenté sur la figure 2, la connexion des fils de la ligne 10 aux entrées ou sorties du processeur 1 peut être réalisée au moyen d'un adaptateur 20 comprenant deux connecteurs 21, 22 et un moyen d'interconnexion 23 reliant les plots internes de ces connecteurs. Le connecteur 21 est connecté au connecteur 3 du micro-ordinateur 2. Le connecteur 22 est connecté à un connecteur 11 qui peut être le connecteur d'extrémité d'un câble de liaison synchrone ou le connecteur de l'équipement distant DCE. Le moyen d'interconnexion 23 peut être réalisé au moyen d'une plaquette de circuit imprimé ou prendre la forme d'un câble reliant les deux connecteurs 21, 22.

Comme on l'a indiqué précédemment, les entrées et sorties de contrôle du processeur 1 choisies pour la mise en oeuvre du procédé de l'invention, ici les entrées DCD, DSR et la sortie DTR, ne sont pas nécessaires à la gestion de la communication synchrone. Les entrées et sorties du processeur 1 restant disponibles, ici les entrées CTS, RI et la sortie RTS, peuvent être connectés si nécessaire aux fils correspondants de la ligne 1, comme représenté en traits pointillés sur la figure 2.

Les connexions qui viennent d'être décrites étant faites, une deuxième étape de mise en oeuvre du procédé de l'invention consiste à prévoir un procédé de pilotage du processeur 1 permettant de gérer la communication synchrone à partir des signaux d'interruptions IT provoqués par les variations du bit DCD (lequel recopie le signal d'horloge de la communication). En pratique, un tel procédé de pilotage du processeur 1 prend la forme d'un programme de pilotage chargé dans le disque magnétique 6 du micro-ordinateur 2 et exécuté par l'Unité Centrale 4.

La figure 3 représente de façon schématique les étapes essentielles du procédé de pilotage selon l'invention. Au cours d'une étape d'initialisation classique 120, l'Unité Centrale procède au démasquage du signal d'interruption matériel IT provenant du processeur 1. Au cours d'une étape 130, l'Unité Centrale attend un signal d'interruption IT provenant du processeur 1. Lorsqu'un signal d'interruption IT est reçu, l'Unité Centrale lit le bit DCD (représentatif du signal d'horloge de la communication synchrone) dans le registre MSR au cours d'une étape 140. Au cours d'une étape 150, l'Unité Centrale analyse le front d'horloge. L'analyse du front d'horloge consiste à déterminer si le bit DCD est passé de 0 à 1 (front montant) ou de 1 à 0 (front descendant). On rappelle ici que, conformément à la règle en matière de transmission synchrone, les données à recevoir doivent être lues quand le front d'horloge est montant et les données à émettre doivent être émises quand le front d'horloge est descendant (ou inversement, selon la convention choisie). Ainsi, si le front d'horloge est montant, l'Unité Centrale au cours d'une étape 160 lit le bit DSR dans le registre MSR du processeur 1, puis retourne à l'étape 130. Si le front d'horloge est descendant, l'Unité Centrale au cours d'une étape 170 écrit le bit DTR dans le registre MCR du processeur 1, puis retourne à l'étape 130. Ainsi, par la répétition des étapes 140, 150, 160 en alternance avec les étapes 140, 150, 170, l'Unité Centrale lit et écrit des données bit à bit en synchronisation avec le signal d'interruption IT, c'est-à-dire en synchronisation avec le signal d'horloge de la communication synchrone.

Comme indiqué sur la figure 3, on peut prévoir le cas où le signal d'interruption IT n'a pas pour origine une variation du bit DCD (pas de front d'horloge). Par exemple, si les fonctions RI ou CTS sont utilisées, le signal d'interruption peut être dû à une variation du bit RI ou CTS et sera traité par l'Unité Centrale d'une manière classique au cours d'étapes de pilotage (non représentées) à la portée de l'homme de l'art, à prévoir entre l'étape 150 et le retour l'étape 130.

Dans ce qui précède, on a décrit un procédé permettant de gérer, à partir d'un processeur de communication asynchrone du type le plus courant, une communication synchrone sans maîtrise du signal d'horloge (mode DTE). On va maintenant décrire une variante du procédé de l'invention permettant de gérer une communication synchrone avec maîtrise du signal d'horloge (mode DCE).

Le problème à résoudre ici est de générer, à partir du processeur asynchrone 1, un tel signal d'horloge, afin de l'injecter dans les fils TC et RC.

Ici, une idée de la présente invention est de connecter la sortie série asynchrone TD du processeur 1 aux fils TC et RC de la ligne synchrone et faire émettre continuellement par cette sortie une suite de 0 et de 1 simulant un signal d'horloge.

La figure 4 représente la mise en oeuvre de cet variante du procédé de l'invention. Le micro-ordinateur 2 est connecté à la ligne de transmission de données synchrones 10 par l'intermédiaire d'un adaptateur 20' selon l'invention. Comme le micro-ordinateur 2 fonctionne maintenant en mode DCE et l'équipement à l'autre extrémité de la ligne (non représenté) en mode DTE, les sens de circulation des données vus par le micro-ordinateur 2 sont inversés. Ainsi, le fil TD de la ligne de transmission 10 est maintenant connecté à l'entrée de contrôle DSR du processeur 1 et le fil RD est connecté à la sortie de contrôle DTR, le fil d'horloge TC ou RC (ou les deux fils TC et RC) étant toujours connecté à l'entrée DCD. Essentiellement, l'adaptateur 20' diffère de l'adaptateur 20 déjà décrit par le fait que la sortie TD du processeur 1 est connectée aux fils d'horloge TC et RC de la ligne 10.

La figure 5 représente les étapes du procédé de pilotage du processeur 1 en mode DCE. Ce procédé diffère du procédé précédemment décrit par le fait qu'une étape d'initialisation 110 est prévue avant l'étape de démasquage 120 et que deux étapes 135, 136 de pilotage de la sortie série TD du processeur 1 sont ajoutées entre les étapes 130 et 140.

Afin de générer le signal d'horloge sur la sortie asynchrone TD du processeur 1, l'étape 110 comprend par exemple les opérations suivantes :
i) programmer le fonctionnement asynchrone de la sortie série TD de la façon suivante :
   - aucun bit de parité,
   - huit bit de données,
   - 1 seul bit de stop.
ii) régler la fréquence de l'horloge interne ICK au double de la vitesse de communication synchrone souhaitée, par exemple 9600 bauds pour une communication synchrone à la vitesse de 4800 bauds, 19200 bauds pour une communication à la vitesse de 96000 bauds, etc.
iii) charger la valeur 01010101, c'est-à-dire la lettre "U" exprimée en binaire, dans le registre THR.

Ces opérations étant réalisées, le processeur 1 émet sur sa sortie série TD un bit de "start" égal à 1, suivi de la valeur 01010101, suivie d'un bit de stop égal à 0. On injecte ainsi dans les fils d'horloge TC, RC de la ligne synchrone 10 un signal logique égal à 1010101010 dont les fluctuations correspondent à celles d'un signal d'horloge classique.

Les étapes 135 et 136 ont pour but de régénérer la valeur "U" dans le registre THR de manière qu'il n'y ait pas de rupture dans l'émission du signal d'horloge. Ainsi, lorsqu'un signal d'interruption IT est reçu à l'étape 130, l'Unité Centrale contrôle à l'étape 135 l'état du registre THR. Si le registre THR est vide, l'Unité Centrale le recharge avec la valeur "U" avant de poursuivre à l'étape 140. Sinon, l'Unité Centrale va directement à l'étape 140 (analyse du front d'horloge).

Bien entendu, le procédé de pilotage selon l'invention est susceptible de nombreuses variantes et perfectionnements. En particulier, si un bit à lire a été perdu sur l'entrée de contrôle DSR, il est possible de déduire la valeur (1 ou 0) du bit perdu à partir du nouveau bit reçu et de la valeur du bit "delta"DSR présent dans le registre MSR (fig. 1), le bit "delta"DSR permettant de savoir si le bit perdu était identique ou différent du nouveau bit reçu.

On a décrit dans ce qui précède un exemple de réalisation du procédé de l'invention au moyen d'un processeur de type UART présent dans un micro-ordinateur de type PC. Il apparaîtra toutefois clairement à l'homme de l'art que le procédé de l'invention peut être mis en oeuvre avec tout type de processeur comportant au moins deux entrées et une sortie de contrôle, une entrée de contrôle au moins étant génératrice d'un signal d'interruption. Ainsi, par exemple, un processeur de communication à sortie parallèle classique comportant au moins deux entrées et une sortie de contrôle pourrait permettre de mettre en oeuvre l'invention. En ce qui concerne le mode DCE nécessitant la maîtrise du signal d'horloge, le procédé de l'invention peut être mis en oeuvre au moyen de tout type de processeur comportant en outre une sortie programmable pouvant émettre une suite ininterrompue de 0 et de 1.

Par ailleurs, dans la présente description et les revendications, le terme "fil" utilisé pour décrire les éléments de la ligne de communication synchrone 10 ne doit pas être interprété de façon limitative et désigne de façon générale tout moyen de transport de signaux logiques, par exemple une fibre optique, un signal électromagnétique modulé, des paires de fils symétriques, etc..

**TABLEAU 1**

| (faisant partie intégrante de la description) : Fonctions standards (*) des liaisons asynchrones ou synchrones | | | | | | |
|---|---|---|---|---|---|---|
| Circuit CCITT | N° de broche (**) | N° de broche (***) | Direction DTE-DCE | Abréviation | Fonction (français) | Fonction (anglais) |
| 102 | 7 | 5 | | SG | Terre de signalisation | Signal Ground |
| 103 | 2 | 3 | → | TD | Emission de Données | Transmitted Data |
| 104 | 3 | 2 | ← | RD | Réception de Données | Received Data |
| 105 | 4 | 7 | → | RTS | Demande pour émettre | Request To Send |
| 106 | 5 | 8 | ← | CTS | Prêt à Emettre | Clear To Send |
| 107 | 6 | 6 | ← | DSR | Poste de Données Prêt | Data Set Ready |
| 108/1 et 108/2 | 20 | 4 | → | DTR | Terminal de Données Prêt | Data Terminal Ready |
| 109 | 8 | 1 | ← | DCD | Détection de Porteuse | Data/Carrier Detect |
| 125 | 22 | 9 | ← | RI | Indicateur d'Appel | Ring Indicator |

| | | | | | | |
|---|---|---|---|---|---|---|
| (*) Selon la Recommandation V.24 du CCITT | | | | | | |
| (**) connecteur 25 broches | | | | | | |
| (***) connecteur 9 broches, selon la norme de la société IBM applicable aux micro-ordinateurs de type PC | | | | | | |

**TABLEAU 2 :**

| Fonctions spécifiques aux liaisons synchrones (*) | | | | | |
|---|---|---|---|---|---|
| Circuit CCITT | N° de Broche | Direction DTE-DCE | Abréviation | Fonction (français) | Fonction (anglais) |
| 114 | 15 | ← | TC | Horloge Emission | Transmitted Clock |
| 115 | 17 | ← | RC | Horloge Réception | Received Clock |

| | | | | | |
|---|---|---|---|---|---|
| (*) Selon la Recommandation V.24 du CCITT | | | | | |

## Revendications

1. Procédé pour établir sur une ligne de transmission de données numériques (10) une communication de type synchrone au moyen d'un processeur de communication (1) comprenant des entrées (DCD, DSR, CTS, RI) et des sorties (DTR, RTS) de contrôle d'une communication, le processeur (1) délivrant un signal d'interruption (IT) sur changement de l'état logique d'au moins une entrée de contrôle, le procédé comprenant une étape consistant à connecter un fil d'émission de données (TD, RD) de la ligne de transmission (10) à une sortie de contrôle du processeur (DTR) caractérisé en ce qu'il comprend en outre des étapes consistant à :
- connecter au moins un fil d'horloge (TC, RC) de la ligne de transmission à une première entrée de contrôle (DCD) du processeur,
- connecter un fil de réception de données (RD, TD) de la ligne de transmission (10) à une deuxième entrée de contrôle (DSR) du processeur,
- générer une interruption externe à chaque variation d'état logique de la première entrée de contrôle (DCD), selon un premier sens de variation ou selon un second sens de variation inverse du premier par démasquage du signal d'interruption (IT) délivré par le processeur (1) et,
- en synchronisation avec les interruptions externes générées à chaque variation de l'état logique de la première entrée de contrôle (DCD), lire bit à bit sur la deuxième entrée de contrôle (DSR) des données à recevoir ou écrire bit à bit sur la sortie de contrôle (DTR) des données à émettre.

2. Procédé selon la revendication 1, dans lequel la lecture bit à bit sur la deuxième entrée de contrôle (DSR) est faite en synchronisation avec un signal d'interruption (IT) apparaissant à chaque variation, selon un premier sens de variation, de l'état logique de la première entrée de contrôle (DCD), et l'écriture bit à bit sur la sortie de contrôle (DTR) est faite en synchronisation avec un signal d'interruption (IT) apparaissant à chaque variation, selon un second sens de variation inverse du premier, de l'état logique de la première entrée de contrôle (DCD).

3. Procédé selon l'une des revendications 1 et 2, pour établir une communication de type synchrone avec contrôle du signal d'horloge (mode DCE) au moyen d'un processeur de communication (1) comportant une sortie série asynchrone (TD), procédé comprenant les étapes consistant à :
- connecter la sortie série (TD) du processeur à au moins un fil d'horloge (TC, RC) de la ligne de transmission (10), et
- faire émettre par ladite sortie série (TD) du processeur une suite de 1 et de 0 ininterrompue.

4. Procédé selon la revendication 3, dans lequel l'étape consistant à faire émettre par la sortie série (TD) du processeur une suite de 1 et de 0 ininterrompue comprend les opérations consistant à :
- programmer la sortie série du processeur comme suit :
. huit bits de données,
. pas de bit de parité,
. un seul bit de stop, et
- envoyer continuellement dans un registre tampon (THR) de la sortie série asynchrone du processeur un terme (U) dont la valeur binaire est égale à 01010101.

5. Système informatique (2) équipé d'un processeur de communication (1) comportant des entrées (DCD, DSR, CTS, RI) et des sorties (DTR, RTS) de contrôle d'une communication, le processeur (1) délivrant un signal d'interruption (IT) sur changement de l'état logique d'au moins une entrée de contrôle, caractérisé en ce qu'il comprend des moyens de pilotage (4, 6) du processeur agencés pour, en synchronisation avec un signal d'interruption (IT) délivré par le processeur à chaque variation de l'état logique d'une première entrée de contrôle (DCD), selon un premier sens de variation ou un second sens de variation inverse du premier, lire bit à bit sur une deuxième entrée de contrôle (DSR) du processeur des données à recevoir, ou écrire bit à bit sur une sortie de contrôle (DTR) du processeur des données à émettre.

6. Système selon la revendication 5, dans lequel lesdits moyens de pilotage du processeur sont agencés pour lire bit à bit la deuxième entrée de contrôle (DSR) en synchronisation avec un signal d'interruption (IT) apparaissant à chaque variation, selon un premier sens de variation, de l'état logique de la première entrée de contrôle (DCD), et écrire bit à bit sur la sortie de contrôle (RTS) en synchronisation avec un signal d'interruption (IT) apparaissant à chaque variation, selon un second sens de variation inverse du premier, de l'état logique de la première entrée de contrôle.

7. Système selon l'une des revendications 5 et 6, dans lequel ledit processeur (1) comporte une sortie série asynchrone (TD), et lesdits moyens de pilotage du processeur sont agencés pour :
- programmer la sortie série (TD) du processeur comme suit :
. huit bits de données,
. pas de bit de parité,
. un seul bit de stop, et
- envoyer continuellement dans un registre tampon (THR) de la sortie série du processeur un terme (U) dont la valeur binaire est égale à 01010101.

8. Système selon l'une des revendications 5 à 7, dans lequel lesdits moyens de pilotage du processeur comprennent un programme stocké dans une mémoire (6) du système.

9. Adaptateur (20, 20') pour connecter à une ligne de transmission de données de type synchrone (10) un système informatique (2) équipé d'un processeur de communication (1) comportant des entrées (DCD, DSR, CTS, RI) et des sorties (DTR, RTS) de contrôle d'une communication, l'adaptateur comportant un agencement pour connecter un fil d'émission de données (RD, TD) de la ligne de transmission de données à une sortie de contrôle (DTR) du processeur caractérisé en ce qu'il est agencé en outre pour :
- connecter au moins un fil d'horloge (TC, RC) de la ligne de transmission de données (10) à une première entrée de contrôle (DCD) du processeur, et
- connecter un fil de réception de données (TD, RD) de la ligne de transmission de données à une deuxième entrée de contrôle (DSR) du processeur.

10. Adaptateur (20') selon la revendication 9, agencé pour connecter une sortie série (TD) du processeur à au moins un fil d'horloge (TC, RC) de la ligne de transmission de données (10).

## Claims

1. Method for the setting up, on a digital data transmission line (10), of a synchronous type communication by means of a communication processor (1) comprising inputs (DCD, DSR, CTS, RI) and outputs (DTR, RTS) for the control of a communication, the processor (1) delivering an interrupt signal (IT) upon a change of the logic state of at least one control input, the method comprising a step consisting in connecting a data transmission wire (TD, RD) of the transmission line (10) to a control output of the processor (DTR) characterized in that it furthermore comprises steps consisting in:
- connecting at least one clock wire (TC, RC) of the transmission line to a first control input (DCD) of the processor,
- connecting a data reception wire (RD, TD) of the transmission line (10) to a second control input (DSR) of the processor,
- generating an external interruption at each variation in logic state of the first control input (DCD), according to a first direction of variation or according to a second direction of variation that is the reverse of the first direction by the unmasking of the interruption signal (IT) delivered by the processor (1), and
- in synchronization with the external interruptions generated at each variation of the logic state of the first control input (DCD), carrying out a bit-by-bit reading on the second control input (DSR) of the data elements to be received or a bit-by-bit writing at the control output (DTR) of the data elements to be sent.

2. Method according to claim 1, wherein the bit-by-bit reading at the second control input (DSR) is done in synchronization with an interrupt signal (IT) that appears at each variation, in a first direction of variation, of the logic state of the first control input (DCD), and the bit-by-bit writing at the control output (DTR) is done in synchronization with an interrupt signal (IT) that appears at each variation, in a second direction of variation that is the reverse of the first direction, of the logic state of the first control input (DCD).

3. Method according to one of the claims 1 and 2, to set up a synchronous type communication with checking of the clock signal (mode DCE) by means of a communication processor (1) comprising an asynchronous serial output (TD), method comprising the steps consisting in:
- connecting the serial output (TD) of the processor to at least one clock wire (TC, RC) of the transmission line (10), and
- bringing about the sending, by said serial output (TD) of the processor, of an uninterrupted sequence of 1 and 0.

4. Method according to claim 3, wherein the step consisting in bringing about the sending, by the serial output (TD) of the processor, of an uninterrupted sequence of 1 and 0, comprises the operations consisting in:
- programming the serial output of the processor as follows:
* eight data bits,
* no parity bit,
* a single stop bit, and
- continuously sending, to a buffer register (THR) of the serial output of the processor, of a term (U) whose binary value is equal to 01010101.

5. Computer system (2) equipped with a communication processor (1) comprising inputs (DCD, DSR, CTS, RI) and outputs (DTR, RTS) for the control of a communication, the processor (1) delivering an interrupt signal (IT) upon a change in the logic state of at least one control input, characterized in that it comprises means for the driving (4, 6) of the processor that are laid out to carry out, in synchronization with an interrupt signal (IT) delivered by the processor at each variation of the logic state of a first control input (DCD), according to a first direction of variation or a second direction of variation that is the reverse of the first direction, a bit-by-bit reading on a second control input (DSR) of the processor of the data elements to be received or a bit-by-bit writing, at a control output (DTR) of the processor, of the data elements to be sent.

6. System according to claim 5, in which said means for the driving of the processor are laid out to carry out the bit-by-bit reading of the second control input (DSR) in synchronization with an interrupt signal (IT) that appears at each variation, in a first direction of variation, of the logic state of the first control input (DCD), and the bit-by-bit writing at the control output (RTS) in synchronization with an interrupt signal (IT) that appears at each variation, in a second direction of variation that is the reverse of the first direction, of the logic state of the first control input.

7. System according to one of the claims 5 and 6, in which said processor (1) comprises an asynchronous series output (TD) and said means for the driving of the processor are laid out to:
- program the serial output (TD) of the processor as follows:
* eight data bits,
* no parity bit,
* a single stop bit, and
- continuously send to a buffer register (THR) of the serial output of the processor a term (U) whose binary value is equal to 01010101

8. System according to one of the claims 5 to 7 in which said means for the driving of the processor comprise a program stored in a memory (6) of the system.

9. Adapter (20, 20') for the connection, to a synchronous type data transmission line (10), of a computer system (2) fitted out with a communication processor (1) comprising inputs (DCD, DSR, CTS, RI) and outputs (DTR, RTS) for the control of a communication, the adapter comprising an arrangement to connect a data transmission wire (RD, TD) of the data transmission line to a control output (DTR) of the processor, characterized in that it is furthermore fitted out to:
- connect at least one clock wire (TC, RC) of the data transmission line (10) to a first control input (DCD) of the processor,
- connect a data reception wire (TD, RD) of the data transmission line to a second control input (DSR) of the processor.

10. Adapter (20') according to claim 9, fitted out to connect a serial output (TD) of the processor to at least one clock wire (TC, RC) of the data transmission line (10).

## Patentansprüche

1. Verfahren zum Aufbau einer synchronartigen Verbindung auf einer Digitaldatenfernleitung (10) mittels eines Kommunikationsprozessors (1), der Eingänge (DCD, DSR, CTS, RI) und Ausgänge (DTR, RTS) zur Kontrolle einer Verbindung umfasst, wobei der Prozessor (1) ein Unterbrechungssignal (IT) abgibt, wenn sich der logische Zustand mindestens eines Kontrolleingangs ändert, wobei das Verfahren einen Schritt umfasst, der darin besteht, einen Datenübertragungsleiter (TD, RD) der Fernleitung (10) an einen Kontrollausgang (DTR) des Prozessors anzuschließen, dadurch gekennzeichnet, dass er außerdem die folgenden Schritte umfasst, die darin bestehen :
- mindestens einen Taktleiter (TC, RC) der Fernleitung an einen ersten Kontrolleingang (DCD) des Prozessors anzuschließen,
- einen Datenempfangsleiter (RD, TD) der Fernleitung (10) an einen zweiten Kontrolleingang (DSR) des Prozessors anzuschließen,
- eine externe Unterbrechung bei jeder Änderung des logischen Zustands des ersten Kontrolleingangs (DCD) zu generieren, und zwar entsprechend einer ersten Änderungsrichtung oder entsprechend einer der ersten gegenüber umgekehrten zweiten Änderungsrichtung durch das Demaskieren des vom Prozessor (1) abgegebenen Unterbrechungssignals (IT), und
- synchron mit den bei jeder Änderung des logischen Zustands des ersten Kontrolleingangs (DCD) generierten externen Unterbrechungen, bitweise am zweiten Kontrolleingang (DSR) zu empfangende Daten auslesen oder bitweise am Kontrollausgang (DTR) zu übertragende Daten einschreiben.

2. Verfahren nach Anspruch 1, wobei das bitweise Auslesen am zweiten Kontrolleingang (DSR) synchron mit einem Unterbrechungssignal (IT) stattfindet, das entsprechend einer ersten Änderungsrichtung bei jeder Änderung des logischen Zustands des ersten Kontrolleingangs (DCD) auftritt, und das bitweise Einschreiben am Kontrollausgang (DTR) synchron mit einem Unterbrechungssignal (IT) stattfindet, das entsprechend einer der ersten gegenüber umgekehrten zweiten Änderungsrichtung bei jeder Änderung des logischen Zustands des ersten Kontrolleingangs (DCD) auftritt.

3. Verfahren nach einem der Ansprüche 1 und 2 zum Aufbau einer synchronartigen Verbindung mit Kontrolle des Taktsignals (DCE-Modus) mittels eines einen asynchronen seriellen Ausgang (TD) umfassenden Kommunikationsprozessors (1), wobei das Verfahren folgende Schritte umfasst, die darin bestehen:
- den seriellen Ausgang (TD) des Prozessors an mindestens einen Taktdraht (TC, RC) der Fernleitung (10) anzuschließen, und
- eine ununterbrochene Reihe von 1 und 0 über den seriellen Ausgang (TD) des Prozessors zu übertragen.

4. Verfahren nach Anspruch 3, wobei der Schritt der Übertragung einer ununterbrochenen Reihe von 1 und 0 über den seriellen Ausgang (TD) des Prozessors folgende Vorgänge umfasst, die darin bestehen:
- den seriellen Prozessorausgang wie folgt zu programmieren:
. acht Datenbits,
. kein Paritätsbit,
. ein einziges Stopbit, und
- andauernd einen Term (U), dessen Binärwert gleich 01010101 ist, an ein Pufferregister (THR) des asynchronen seriellen Ausgangs des Prozessors zu schicken.

5. Computersystem (2), das mit einem Kommunikationsprozessor (1) versehen ist, der Eingänge (DCD, DSR, CTS, RI) und Ausgänge (DTR, RTS) zur Kontrolle einer Verbindung umfasst, wobei der Prozessor (1) ein Unterbrechungssignal (IT) abgibt, wenn sich der logische Zustand mindestens eines Kontrolleingangs ändert, dadurch gekennzeichnet, dass es Prozessorsteuermittel (4, 6) umfasst, die ausgelegt sind, um synchron mit einem Unterbrechungssignal (IT), das vom Prozessor bei jeder Änderung des logischen Zustands eines ersten Kontrolleingangs (DCD) entsprechend einer ersten Änderungsrichtung oder einer gegenüber der ersten umgekehrten zweiten Änderungsrichtung abgegeben wird, bitweise am zweiten Kontrolleingang (DSR) des Prozessors zu empfangende Daten auszulesen, oder bitweise am Kontrollausgang (DTR) des Prozessors zu übertragende Daten einzuschreiben.

6. System nach Anspruch 5, wobei die Prozessorsteuermittel ausgelegt sind, um bitweise den zweiten Kontrolleingang (DSR) synchron mit einem entsprechend einer ersten Änderungsrichtung bei jeder Änderung des logischen Zustands des ersten Kontrolleingangs (DCD) auftretenden Unterbrechungssignal (IT) auszulesen, und um bitweise am Kontrollausgang (RTS) synchron mit einem entsprechend gegenüber der ersten umgekehrten zweiten Änderungsrichtung bei jeder Veränderung des logischen Zustands des ersten Kontrolleingangs auftretenden Unterbrechungssignal (IT) einzuschreiben.

7. System nach einem der Ansprüche 5 und 6, wobei der Prozessor (1) einen asynchronen seriellen Ausgang (TD) umfasst und die Prozessorsteuermittel ausgelegt sind, um:
- den seriellen Prozessorausgang (TD) wie folgt zu programmieren:
. acht Datenbits,
. kein Paritätsbit,
. ein einziges Stopbit, und
- andauernd einen Term (U), dessen Binärwert gleich 01010101 ist, an ein Pufferregister (THR) des asynchronen seriellen Ausgangs des Prozessors zu schicken.

8. System nach einem der Ansprüche 5 bis 7, wobei die Prozessorsteuermittel ein in einem Speicher (6) des Systems abgelegtes Programm umfassen.

9. Adapter (20, 20'), um an eine Fernleitung synchronartiger Daten (10) ein Computersystem (2) anzuschließen, das mit einem Kommunikationsprozessor (1) versehen ist, der Eingänge (DCD, DSR, CTS, RI) und Ausgänge (DTR, RTS) zur Kontrolle einer Verbindung umfasst, wobei der Adapter eine Einrichtung umfasst, um einen Datenübertragungsleiter (RD, TD) der Datenfernleitung an einen Kontrollausgang (DTR) des Prozessors anzuschließen, dadurch gekennzeichnet, dass er außerdem dazu ausgelegt ist, um
- mindestens einen Taktdraht (TC, RC) der Datenfernleitung (10) an einen ersten Kontrolleingang (DCD) des Prozessors anzuschließen, und
- einen Datenempfangsleiter (TD, RD) der Datenfernleitung an einen zweiten Kontrolleingang (DSR) des Prozessors anzuschließen.

10. Adapter (20') nach Anspruch 9, ausgelegt um einen seriellen Ausgang (TD) des Prozessors an mindestens einen Taktleiter (TC, RC) der Datenfernleitung (10) anzuschließen.
